# EUROPEAN PATENT APPLICATION

(11) **EP 4 636 905 A1**
(43) Date of publication of application: **22.10.2025**
(21) Application number: 24852189.0
(22) Date of filing: 31.07.2024
(51) Int. Cl.: H01M 10/54, B09B 3/35, H01M 4/525, H01M 4/505, H01M 4/36, H01M 10/052, B09B 101/16, H01M 4/02

(54) **METHOD FOR REGENERATING POSITIVE ELECTRODE ACTIVE MATERIAL, REGENERATED POSITIVE ELECTRODE ACTIVE MATERIAL MANUFACTURED THEREBY, AND SECONDARY BATTERY COMPRISING SAME**

(30) Priority: 09.08.2023 KR 20230103933
(71) Applicant: LG Energy Solution, Ltd., Seoul 07335 (KR)
(72) Inventor: KIM, Yeon Jun, Daejeon 34122 (KR); CHOI, Jeong Mi, Daejeon 34122 (KR); KIM, Hyemin, Daejeon 34122 (KR); KWON, Ohsung, Daejeon 34122 (KR); YU, Hyemin, Daejeon 34122 (KR); LEE, Jeongbae, Daejeon 34122 (KR)
(74) Representative: Hoffmann Eitle
(86) International application number: PCT/KR2024/011209
(87) International publication number: WO 2025/033835

(57) **Abstract**

The present invention relates to a method of recycling a positive electrode active material, a recycled positive electrode active material prepared using the method, and a secondary battery including the recycled positive electrode active material. More specifically, the method of the present invention includes a step of recovering a positive electrode active material in a positive electrode active material layer by thermally decomposing a binder and conductive material in the positive electrode active material layer by heat-treating a waste positive electrode having the positive electrode active material layer formed on a current collector; a step of performing first milling on the recovered positive electrode active material; a step of adding a lithium precursor to the first milled positive electrode active material and performing annealing at 400 to 1000 °C; and a step of performing second milling on the annealed positive electrode active material.

According to the present invention, by performing first milling on a positive electrode active material recovered without a washing process after heat treatment of a waste positive electrode, adding a lithium precursor to the positive electrode active material subjected to the first milling, performing annealing, and then performing second milling, damage to the surface of the positive electrode active material may be prevented, the particle size of the recycled positive electrode active material may be uniform, and the increase in particle size may be minimized, thereby providing a recycled positive electrode active material having excellent battery characteristics.

## Description

### [Technical Field]

### [Cross-Reference to Related Application]

This application claims priority to Korean Patent Application No. 10-2023-0103933, filed on August 09, 2023, in the Korean Intellectual Property Office, the disclosure of which is incorporated herein by reference.

The present invention relates to a method of recycling a positive electrode active material, a recycled positive electrode active material prepared using the method, and a secondary battery including the recycled positive electrode active material. More particularly, according to the present invention, by performing first milling on a positive electrode active material recovered without a washing process after heat treatment of a waste positive electrode, adding a lithium precursor to the positive electrode active material subjected to the first milling, performing annealing, and then performing second milling on the annealed positive electrode active material, damage to the surface of the positive electrode active material may be prevented, the particle size of the recycled positive electrode active material may be uniform, and the increase in particle size may be minimized, thereby improving battery characteristics. In addition, the method is environmentally friendly because the method does not use acid in the recovery and recycling of a positive electrode active material. Accordingly, process costs may be reduced as neutralization and wastewater treatment are not required. In addition, a positive electrode active material is recycled without decomposition, so there are no discarded metal elements. In addition, since organic solvents are not used, there is no risk of generating toxic gases or explosion. In addition, economics and productivity may be greatly improved.

### [Background Art]

In general, a lithium secondary battery consists of a positive electrode formed by coating a metal foil, such as aluminum, with a positive electrode active material layer; a negative electrode formed by coating a metal foil, such as copper, with a negative electrode active material layer; a separator for preventing mixing of the positive electrode and negative electrode; and an electrolyte solution that allows lithium ions to move between the positive and negative electrodes.

In the positive electrode active material layer, a lithium-based oxide is mainly used as an active material. In the negative electrode active material layer, a carbon material is mainly used as an active material. In general, the lithium-based oxide contains rare metals such as cobalt, nickel, and manganese. Accordingly, studies on recovery and recycling of rare metals from the positive electrodes of lithium secondary batteries that are discarded after use or positive electrode scraps (hereinafter referred to as "waste positive electrodes") generated when manufacturing lithium secondary batteries are being actively conducted.

According to the related arts for recovering rare metals from a waste positive electrode, after dissolving a waste positive electrode using hydrochloric acid, sulfuric acid, or nitric acid, rare metals such as cobalt, manganese, and nickel are extracted using an organic solvent, and then the extracted metals are used as raw materials for synthesizing a positive electrode active material.

However, in the case of the method of extracting rare metals using an acid, a neutralization process and a wastewater treatment process are necessary due to environmental pollution problems, which greatly increases process costs. In addition, lithium, which is the main metal of a positive electrode active material, cannot be recovered by the above method.

To solve these drawbacks, methods (direct recycling methods) of directly recycling a positive electrode active material from a waste positive electrode without decomposing the positive electrode active material are being studied. As such methods, there are mainly four methods such as calcination, solvent dissolution, aluminum (Al) foil dissolution, and crushing & screening.

The calcination method can be performed in a simple process, but has disadvantages such as formation of foreign substances on the surface of a recycled positive electrode active material, which degrades the rate performance of a battery. In addition to the above disadvantages, waste gas is generated, and energy consumption is excessive.

In addition, when using the solvent dissolution method, a recycled positive electrode active material having a relatively clean surface may be obtained. However, since a solvent such as N-methyl-2-pyrrolidone (NMP) used to dissolve a binder is a toxic gas and has an explosion hazard, the method has poor stability and requires an expensive solvent recovery process.

In addition, in the case of the aluminum foil dissolution method, process stability is good, process cost is low, and binder removal is easy. However, foreign substances that are difficult to remove are formed on the surface of a recycled positive electrode active material, and there is a risk of explosion due to hydrogen gas generated in a process of removing aluminum foil.

In addition, the crushing & screening method can be performed through the simplest process among the above methods. However, it is difficult to completely separate a current collector and a positive electrode active material, the particle size distribution of the positive electrode active material is changed during a crushing process, and the battery characteristics of the recycled positive electrode active material are degraded due to a residual binder.

Therefore, there is an urgent need to develop a method of safely recycling a positive electrode active material having improved output performance in an environmentally friendly manner at a low cost through a simple process without loss of metal elements from a waste positive electrode.

### [Disclosure]

### [Technical Problem]

Therefore, the present invention has been made in view of the above problems, and it is one object of the present invention to provide a method of recycling a positive electrode active material and a recycled positive electrode active material having excellent battery characteristics prepared by the method. According to the present invention, by performing first milling on a positive electrode active material recovered without a washing process after heat treatment of a waste positive electrode, adding a lithium precursor to the positive electrode active material subjected to the first milling, performing annealing, and then performing second milling on the annealed positive electrode active material, damage to the surface of the positive electrode active material may be prevented, the particle size of the recycled positive electrode active material may be uniform, and the increase in particle size may be minimized, thereby providing a recycled positive electrode active material having excellent battery characteristics. In addition, the method is environmentally friendly because the method does not use acid in the recovery and recycling of a positive electrode active material. Accordingly, process costs may be reduced as neutralization and wastewater treatment are not required. In addition, a positive electrode active material is recycled without decomposition, so there are no discarded metal elements. In addition, since organic solvents are not used, there is no risk of generating toxic gases or explosion. In addition, economics and productivity may be greatly improved.

It is another object of the present invention to provide a secondary battery including a positive electrode active material having excellent battery characteristics.

The above and other objects can be accomplished by the present invention described below.

### [Technical Solution]

I) In accordance with one aspect of the present invention, provided is a method of recycling a positive electrode active material, the method including recovering a positive electrode active material in a positive electrode active material layer by thermally decomposing a binder and conductive material in the positive electrode active material layer by heat-treating a waste positive electrode having the positive electrode active material layer formed on a current collector; performing first milling on the recovered positive electrode active material; adding a lithium precursor to the first milled positive electrode active material and performing annealing at 400 to 1000 °C; and performing second milling on the annealed positive electrode active material.
II) According to I), the positive electrode active material layer may preferably include one or more selected from the group consisting of lithium nickel oxide (LNO)-based positive electrode active materials, nicke·cobalt·manganese (NCM)-based positive electrode active materials, nickel·cobalt·aluminum (NCA)-based positive electrode active materials, and nickel·cobalt·manganese·aluminum (NCMA)-based positive electrode active materials, and may include Ni in an amount of 60 mol% or more based on 100 mol% in total of other metals other than Li.
III) According to I) or II), the heat treatment may be performed preferably at 300 to 650 °C in air or oxygen atmosphere.
IV) According to I) to III), the first and second milling may be performed preferably using a centrifugal mill or a jet mill.
V) According to I) to IV), the first and second milling may be performed preferably at 6000 to 20000 rpm.
VI) According to I) to IV), the positive electrode active material obtained after the second milling may preferably have an increase rate in average particle diameter of 14 % or less and a standard deviation of average particle diameter of 3.0 or less compared to a positive electrode active material in a waste positive electrode.
VII) According to I) to V), the lithium precursor may include preferably one or more selected from LiOH, Li₂CO₃, LiNO₃, and Li₂O.
VIII) According to I) to VII), based on 100 mol% in total of lithium in the positive electrode active material used as a raw material, the lithium precursor may be added preferably in an amount capable of providing lithium in an amount corresponding to 1 mol% to 40 mol%.
IX) According to I) to VIII), the annealing may be performed preferably at 400 to 1000 °C.
X) According to I) to IX), the method of recycling a positive electrode active material may preferably include washing the second milled positive electrode active material; coating a surface of the second milled positive electrode active material; or washing the second milled positive electrode active material and then coating a surface thereof.
XI) According to I) to X), in the washing step, a weight ratio of an annealed positive electrode active material to a washing solution may be preferably 1:0.5 to 1:10.
XII) According to I) to XI), the surface coating may be performed preferably by coating the surface with one or more of metals, organic metals, and carbon components in a solid or liquid form and heat-treating the surface at 100 to 1200 °C.
XIII) In accordance with another aspect of the present invention, provided is a recycled positive electrode active material including one or more selected from the group consisting of lithium nickel oxide (LNO)-based positive electrode active materials, nickel·cobalt·manganese(NCM)-based positive electrode active materials, nickel·cobalt·aluminum (NCA)-based positive electrode active materials, and nickel·cobalt·manganese·aluminum (NCMA)-based positive electrode active materials; including Ni in an amount of 60 mol% or more based on 100 mol% in total of other metals other than Li; and having a standard deviation of average particle diameter of 3.0 or less.
XIV) According to XIII), a surface of the positive electrode active material may be preferably coated with a coating agent containing metal or carbon.
XV) According to XIII) or XIV), the metal may be preferably boron (B), tungsten (W), or a mixture thereof.
XVI) In accordance with still another aspect of the present invention, provided is a recycled positive electrode active material prepared using the method according to I) to XII).
XVII) In accordance with yet another aspect of the present invention, provided is a secondary battery including the recycled positive electrode active material according to any one of XIII) to XVI).

### [Advantageous Effects]

The present invention has an effect of providing a method of recycling a positive electrode active material, a recycled positive electrode active material having excellent battery characteristics prepared using the method, and a secondary battery including the recycled positive electrode active material. According to the present invention, by performing first milling on a positive electrode active material recovered without a washing process after heat treatment of a waste positive electrode, adding a lithium precursor to the positive electrode active material subjected to the first milling, performing annealing, and then performing second milling, damage to the surface of the positive electrode active material can be prevented, the process cost can be reduced, the particle size of the recycled positive electrode active material can be uniform, the increase in particle size can be minimized, and the particle distribution in the waste positive electrode can be similar to that in the positive electrode active material, thereby improving battery characteristics. In addition, the method is environmentally friendly because acids are not used in the method. Accordingly, process costs can be reduced as neutralization and wastewater treatment are not required. In addition, a positive electrode active material is recycled without decomposition, so there are no discarded metal elements. In addition, since a current collector is not melted, the current collector can be recovered. In addition, since organic solvents are not used, there is no risk of generating toxic gases or explosion. In addition, the method is suitable for mass production by using an easy-to-manage process such as heat treatment or precipitation.

### [Description of Drawings]

The following drawings attached to this specification illustrate embodiments of the present invention, and are presented to further understand the technical idea of the present invention in combination with the detailed description described below. Accordingly, the present invention is not limited to these drawings.
FIG. 1 is a diagram showing positive electrode scraps that are discarded after cutting an electrode plate from a positive electrode sheet.
FIG. 2 is a graph showing the particle distribution of recycled positive electrode active materials or fresh positive electrode active materials obtained in Example 1, Reference Example, and Comparative Examples 1 to 3.
FIG. 3 is a graph showing the particle distribution of recycled positive electrode active materials or fresh positive electrode active materials obtained from Examples 1 and 2, Reference Example, and Comparative Examples 1 and 4.
FIG. 4 is a flowchart for explaining a process for recycling a positive electrode active material according to the present invention.

### [Best Mode]

The present inventors have studied a method for improving the battery characteristics of a recycled positive electrode active material by using a method (direct recycled method) of directly recycling a positive electrode active material from a waste positive electrode without decomposing the positive electrode active material. During the above study, the present inventors confirmed that, when first milling was performed on a recovered positive electrode active material without washing after heat treatment, a lithium precursor was added to the positive electrode active material that underwent first milling, annealing was performed, and then second milling was performed, damage to the surface of the recycled positive electrode active material was prevented, the particle size was uniformized, the increase in particle size was reduced, and the particle distribution became similar to that of a positive electrode active material in a virgin positive electrode, thereby improving the battery characteristics of the recycled positive electrode active material. Based on these results, the present inventors conducted further studies to complete the present invention.

Hereinafter, a method of recycling a positive electrode active material according to the present invention, a recycled positive electrode active material prepared using the method, and a secondary battery including the recycled positive electrode active material will be described in detail.

The terms and words which are used in the present specification and the appended claims should not be construed as being confined to common meanings or dictionary meanings but should be construed as having meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

### Method of recycling positive electrode active material

The method of recycling a positive electrode active material of the present invention includes a step of recovering a positive electrode active material in a positive electrode active material layer by thermally decomposing a binder and conductive material in the positive electrode active material layer by heat-treating a waste positive electrode having the positive electrode active material layer formed on a current collector; a step of performing first milling on the recovered positive electrode active material; a step of adding a lithium precursor to the first milled positive electrode active material and performing annealing at 400 to 1000 °C; and a step of performing second milling on the annealed positive electrode active material. In this case, damage to the surface of a recycled positive electrode active material may be prevented, process costs may be reduced, the particle size of the recycled positive electrode active material may be uniform, and increase in particle size may be minimized, thereby providing a positive electrode active material having excellent battery characteristics. In addition, the method is environmentally friendly because the method does not use acid in the recovery and recycling of a positive electrode active material. Accordingly, process costs may be reduced as neutralization and wastewater treatment are not required. In addition, a positive electrode active material is recycled without decomposition, so there are no discarded metal elements. In addition, since a current collector is not melted, the current collector may be recovered. In addition, since organic solvents are not used, there is no risk of generating toxic gases or explosion. In addition, the method is suitable for mass production by using an easy-to-manage process such as heat treatment or precipitation

Hereinafter, each step of the method of recycling a positive electrode active material will be described in detail.

### (a) Recovering positive electrode active material from waste positive electrode

Step (a) of recovering a positive electrode active material from a waste positive electrode according to the present invention may be preferably a step of recovering a positive electrode active material in a positive electrode active material layer by thermally decomposing a binder and conductive material in the positive electrode active material layer by heat-treating a waste positive electrode having the positive electrode active material layer formed on a current collector. In this case, a simple process may be implemented, and a binder, a conductive material, and a current collector may be completely removed.

The waste positive electrode may be preferably a positive electrode separated from a lithium secondary battery discarded after use, or a defective positive electrode sheet or a positive electrode scrap generated in a process of manufacturing a lithium secondary battery, more preferably a positive electrode scrap remaining after blanking a positive electrode sheet to obtain a positive electrode plate.

The positive electrode active material layer of step (a) may preferably include a positive electrode active material, a binder, and a conductive material.

For example, the positive electrode active material layer may include one or more selected from the group consisting of a lithium nickel oxide (LNO)-based positive electrode active material, a nickel·cobalt·manganese(NCM)-based positive electrode active material, a nickel·cobalt·aluminum (NCA)-based positive electrode active material, and a nickel·cobalt·manganese·aluminum (NCMA)-based positive electrode active material. In this case, reversible capacity and thermal stability may be excellent.

The positive electrode active material may include preferably one or more selected from the group consisting of a lithium cobalt oxide such as LiCoO₂ (hereinafter referred to as "LCO"); a lithium manganese oxide such as LiMnO₂ or LiMn₂O₄; a lithium iron phosphate compound such as LiFePO₄; a lithium nickel cobalt aluminum oxide (NCA); a lithium nickel oxide such as LiNiO₂; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. More preferably, the positive electrode active material may be a nickel manganese-based lithium composite metal oxide, an NCM-based lithium composite transition metal oxide, or a mixture thereof. In this case, reversible capacity and thermal stability may be excellent.

As another specific example, the positive electrode active material may be a compound represented by Chemical Formula 1 below.

[Chemical Formula 1] LiₐNiₓMn_{y}Co_{z}M_{w}O_{2+δ}

In Chemical Formula 1, M includes one or more selected from the group consisting of B, W, Al, Ti, and Mg, 1<a≤0.1, 0<x<0.95, 0<y<0.8, 0<z<1.0, 0≤w≤0.1, -0.02≤δ≤0.02, x+y+z+w=1.

For example, based on 100 mol% in total of other metals other than Li, the positive electrode active material may include Ni in an amount of 60 mol% or more, preferably 80 mol% or more, more preferably 81 mol% or more. Within this range, initial discharge capacity, output performance, capacity characteristics, and resistance characteristics may be excellent.

In the present disclosure, the Ni content may be measured by ion chromatography (IC) commonly used in the technical field to which the present invention pertains. As a specific example, an inductively coupled plasma (IC-ICP) analyzer, an IC-ICP-MS analyzer, or an IC-ICP-AES analyzer may be used.

For example, the conductive material may be a carbon-based conductive material, preferably carbon black, CNT, or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

For example, the heat treatment may be performed under an air atmosphere or under an oxygen atmosphere. In this case, the binder and the conductive material are thermally decomposed into CO₂ and H₂O and removed, thereby separating the positive electrode active material from the current collector, and the separated positive electrode active material is easily separated in powder form.

For example, the oxygen may have a purity of 59 % or more, preferably 70 % or more, more preferably 80 % or more, still more preferably 90 % or more, still more preferably 90 to 99 %. Within this range, the binder and the conductive material may be completely removed, and the stability of Ni in the active material may be increased.

The purity (%) of the oxygen may be expressed as volume% or mol%.

The purity of oxygen in the present invention may be measured without particular limitations using measurement methods commonly used in the technical field to which the present invention pertains.

For example, the heat treatment may be performed at 300 to 650 °C, preferably 400 to 630 °C, more preferably 500 to 600 °C, still more preferably 530 to 600 °C, still more preferably 530 to 580 °C. Within this range, since a current collector is not melted and only a binder is removed, a positive electrode active material may be easily separated from the current collector.

The heat treatment time may be preferably 10 minutes to 5 hours, more preferably 30 minutes to 5 hours, still more preferably 30 minutes to 2 hours, still more preferably 30 minutes to 1 hour. Within this range, since a current collector is not melted and only a binder is removed, a positive electrode active material may be easily separated from the current collector.

In the present disclosure, the heat treatment time is time of heat treatment performed at the corresponding heat treatment temperature, and does not include time required to reach the corresponding heat treatment temperature.

The heat treatment may be performed at a temperature increase rate of 1 to 20 °C/min, preferably 2 to 15 °C/min, more preferably 3 to 10 °C/min, still more preferably 3 to 7 °C/min. Within this range, heat treatment may be performed without causing strain to heat treatment equipment, and thermal shock to positive electrode scraps may be prevented.

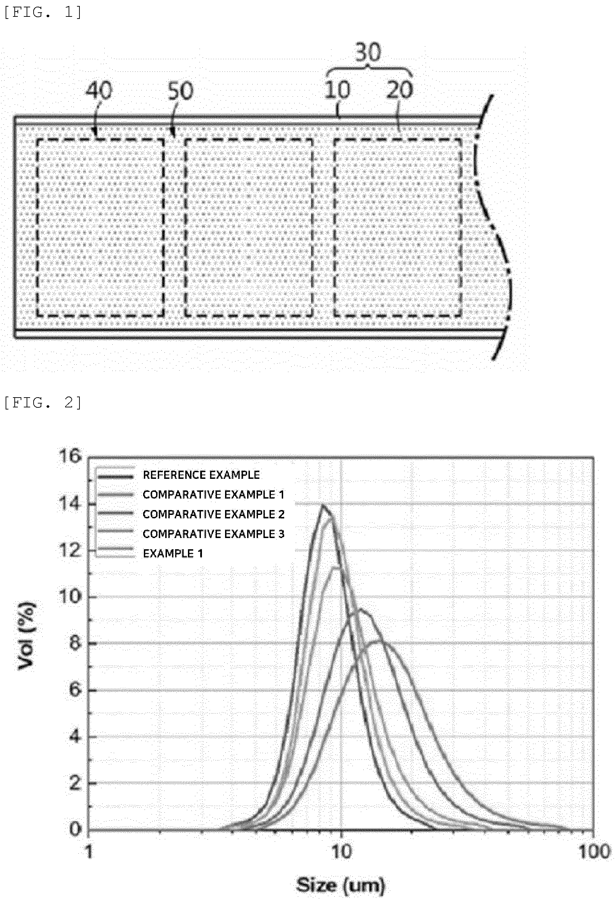

FIG. 1 below is a diagram showing positive electrode scraps that are discarded after cutting a positive electrode plate from a positive electrode sheet.

Referring to FIG. 1, aluminum foil 10, which is a long sheet-shaped positive electrode current collector, is coated with a positive electrode active material layer 20 including a positive electrode active material, a conductive material, and a binder to obtain a positive electrode sheet 30. Then, a positive electrode plate 40 is obtained by blanking the positive electrode sheet 30 to a certain size. At this time, portions remaining after the blanking are positive electrode scraps 50. The blanking is a means for cutting the positive electrode sheet.

In addition, the positive electrode active material layer 20 is formed by coating the aluminum foil 10 with slurry obtained by mixing a positive electrode active material, a conductive material, a binder, and a solvent. Since the slurry is very sensitive to environmental factors such as temperature, it is very difficult to determine the coating conditions. Accordingly, waste positive electrode sheets are generated until the conditions for manufacturing the positive electrode sheet 30 of desired quality are determined through a predetermined test.

For reference, in the following examples, positive electrode scraps were used as a waste positive electrode.

### (b) Performing first milling on recovered positive electrode active material

The method of recycling a positive electrode active material of the present invention includes step (b) of performing first milling on the recovered positive electrode active material. In this case, the particle size of a positive electrode active material may be uniform, thereby providing a positive electrode active material having excellent battery characteristics. In addition, since a washing process for the recovered positive electrode active material is omitted, damage to the surface of a positive electrode active material may be prevented, and economics and productivity may be greatly improved.

For example, the first milling may be performed using a centrifugal mill or a jet mill, preferably a centrifugal mill. In this case, the recovered positive electrode active material is uniformly pulverized, so that uniform particles may be obtained.

For example, the first milling may be performed at 6000 to 20000 rpm, preferably 8000 to 18000 rpm, more preferably 9000 to 16000 rpm, still more preferably 11000 to 14000 rpm, still more preferably 11000 to 13000 rpm. Within this range, the crushing efficiency may be excellent, the particles of a positive electrode active material may be prevented from being broken, and the productivity may be improved. When the milling speed is less than 6000 rpm, the milling effect may be insignificant. When the milling speed exceeds 20000 rpm, particle breakage of the positive electrode active material may occur.

For example, the first milling may be performed for 5 seconds to 150 seconds, preferably 10 seconds to 120 seconds, more preferably 10 seconds to 100 seconds, still more preferably 15 seconds to 80 seconds, still more preferably 15 seconds to 60 seconds, still more preferably 15 seconds to 40 seconds. Within this range, the crushing efficiency may be excellent, the particles of a positive electrode active material may be prevented from being broken, and the productivity may be improved.

For example, after the first milling, the average particle diameter of the positive electrode active material may be 7.0 to 9.0 µm, preferably 7.3 to 8.5 µm, more preferably 7.5 to 8.5 µm. Within this range, battery characteristics may be improved.

In the present disclosure, the particle distribution and the average particle diameter may be measured by a measuring method commonly used in the art to which the present invention pertains. For example, the particle distribution and the average particle diameter may be measured by a laser diffraction method. Specifically, positive electrode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter (D50) is calculated based on 50 % of the particle diameter distribution in the measuring device, and standard deviation may be calculated for the average particle diameter (D50).

For example, the filter size of the centrifugal mill may be 0.08 to 10.0 mm, preferably 0.08 to 7 mm, more preferably 0.08 to 5 mm, still more preferably 0.08 to 3 mm, still more preferably 0.08 to 2 mm, still more preferably 0.08 to 1.0 mm. Within this range, the size of the positive electrode active material particles may be uniform.

In the present disclosure, the filter size of the centrifugal mill is not particularly limited when it is a filter size commonly used in the technical field to which the present invention belongs. For example, the filter of a centrifugal mill has the shape of a circular strip. The strip has small holes that are tightly packed like a sieve, and the filter size refers to the size of the holes.

### (c) Adding lithium precursor to first milled positive electrode active material and performing annealing at 400 to 1000 °C

The method of recycling a positive electrode active material of the present invention include step (c) of adding a lithium precursor to the first milled positive electrode active material and performing annealing at 400 to 1000 °C. In this case, by improving crystallinity through an increase in crystallinity or recovery of a crystal structure, the battery characteristics of a recycled positive electrode active material may be improved.

Step (c) of performing annealing may be preferably a step of adding a lithium precursor to the recovered positive electrode active material and performing annealing at 400 to 1000 °C, more preferably 600 to 900 °C under oxygen (O₂) or air. In this case, crystallinity, such as an increase in the crystallinity of the positive electrode active material and recovery of a crystal structure, may be improved, and the battery characteristics of a recycled positive electrode active material may be improved.

The lithium precursor may include preferably one or more selected from the group consisting of LiOH, Li₂CO₃, LiNO₃, and Li₂O.

The lithium precursor may be preferably added in an amount corresponding to the reduced amount of lithium based on an amount of lithium in the positive electrode active material of step (a) based on the amount of lithium in the recovered positive electrode active material. As a specific example, when the positive electrode active material of step (a) is the positive electrode active material represented by Chemical Formula 1, the lithium precursor may be added in an amount corresponding to a molar ratio of lithium of 0.0001 to 0.2, preferably 0.001 to 0.2, more preferably 0.005 to 0.017, still more preferably 0.007 to 0.015, still more preferably 0.009 to 0.013 based on the molar ratio of lithium in the positive electrode active material of step (a). Within this range, by supplementing lithium in the recycled positive electrode active material, crystallinity may be increased, or a crystal structure may be recovered, thereby improving crystallinity. Thus, the battery characteristics of the recycled positive electrode active material may be improved.

In the present disclosure, the molar ratio of lithium and other metals in the positive electrode active material was measured using an ICP analyzer. At this time, a general ICP analyzer commonly used in laboratories may be used, but there is no deviation depending on measuring devices or methods.

As another example, the lithium precursor may be added in an amount that may provide lithium corresponding to 1 to 40 mol%, preferably 1 to 30 mol%, more preferably 3 to 20 mol%, still more preferably 7 to 17 mol%, still more preferably 7 to 11 mol% based on 100 mol% in total of lithium contained in the positive electrode active material as a raw material. Within this range, since there is no residual precursor that causes an increase in the resistance of the recycled positive electrode active material, battery characteristics may be improved. In addition, compared to the past, economic advantages may be obtained because the crystal structure may be restored with a small amount of lithium precursor.

In the present disclosure, the raw material is the opposite of 'recycled', meaning something that was first created.

For example, the annealing may be performed at 400 to 1000 °C, preferably 400 to 900 °C, more preferably 400 to 800 °C, still more preferably 450 to 750 °C, still more preferably 450 to 710 °C under air or oxygen atmosphere. Within this range, a crystal structure may be recovered, and thus the rate performance of a battery may be excellent.

The annealing temperature may be adjusted within a limited range according to the melting point of the lithium precursor. For example, in the case of LiCO₃ as the lithium precursor, the melting point thereof is 723 °C, and thus annealing may be performed at preferably 700 to 900 °C, more preferably 710 to 780 °C. In the case of LiOH as the lithium precursor, the melting point thereof is 462 °C, and thus annealing may be performed at preferably 400 to 600 °C, more preferably 450 to 480 °C. Within this range, a crystal structure may be recovered, and thus the rate performance of a battery may be excellent.

The annealing temperature is preferably a temperature exceeding the melting point of the lithium precursor. However, when the annealing temperature exceeds 1,000 °C, thermal decomposition of the positive electrode active material may occur, resulting in deterioration of battery performance. Accordingly, the annealing temperature is preferably 1,000 °C or lower.

For example, the annealing time may be preferably 1 to 15 hours, more preferably 2 to 10 hours, still more preferably 3 to 8 hours, still more preferably 4 to 6 hours, as a specific example, about 5 hours. Within this range, the crystal structure may be sufficiently recovered, and economics may be improved.

The annealing temperature may preferably be reached at a heating rate of 1 to 10 °C/min, more preferably 1 to 7 °C/min, still more preferably 2 to 4 °C/min. In this case, the crystallinity of a recycled positive electrode active material may be further increased, and thus the battery characteristics of a recycled positive electrode active material may be improved.

For example, the annealing step may include a cooling process. As a specific example, the cooling process may be natural cooling within a furnace. In this case, the crystallinity of a recycled positive electrode active material may be further increased, and thus the battery characteristics of a recycled positive electrode active material may be improved.

In the present disclosure, annealing may follow the definition used in the technical field to which the present invention pertains. As a specific example, annealing may be defined as a heat treatment operation that heals deformation or lattice defects and increases crystallinity by heating a positive electrode active material with a deformed structure or lattice defects for an appropriate period of time at a temperature, i.e., a temperature above a recrystallization temperature, that allows the atoms of main components in the positive electrode active material to sufficiently diffuse and move.

### (d) Performing second milling on annealed positive electrode active material

The method of recycling a positive electrode active material according to the present invention includes a step of performing second milling on the annealed positive electrode active material. In this case, by reducing the particle size of the positive electrode active material that has increased through the annealing step, a recycled positive electrode active material having a particle size similar to that of a positive electrode active material in a waste positive electrode may be provided, and battery characteristics may be improved.

For example, the second milling may be performed using a centrifugal mill or a jet mill, preferably a centrifugal mill. In this case, by reducing the particle size of the positive electrode active material that has increased through the annealing step, a recycled positive electrode active material having a particle size similar to that of a positive electrode active material in a waste positive electrode may be provided, and battery characteristics may be improved.

For example, the second milling may be performed at 6000 to 20000 rpm, preferably 8000 to 20000 rpm, more preferably 10000 to 19000 rpm, still more preferably 12000 to 19000 rpm, still more preferably 14000 to 19000 rpm, still more preferably 16000 to 19000 rpm. Within this range, the crushing efficiency may be excellent, a recycled positive electrode active material having a particle size similar to that of a positive electrode active material in a waste positive electrode may be provided, and the productivity may be improved.

For example, the second milling may be performed for 5 seconds to 150 seconds, preferably 10 seconds to 120 seconds, more preferably 10 seconds to 100 seconds, still more preferably 10 seconds to 80 seconds, still more preferably 15 seconds to 60 seconds. Within this range, the crushing efficiency may be excellent, the particles of a positive electrode active material may be prevented from being broken, and the productivity may be improved.

After the second milling, for example, the positive electrode active material may have an average particle diameter of 7.0 to 11.0 µm, preferably 7.5 to 10 µm, more preferably 7.5 to 9.0 µm, still more preferably 8.0 to 9.0 µm. Within this range, battery characteristics may be improved.

After the second milling, for example, the recycled positive electrode active material may have a standard deviation of average particle diameter of 3.0 or less, preferably 2.7 or less, more preferably 2.5 or less, still more preferably 0.1 to 2.5. Within this range, the particle distribution of the recycled positive electrode active material may be similar with that of the positive electrode active material in the waste positive electrode, thereby improving battery characteristics.

After the second milling, for example, the obtained positive electrode active material may have an increase rate in average particle diameter of 14 % or less, preferably 12 % or less, more preferably 10 % or less, still more preferably 8 % or less, still more preferably 0.1 to 8 % compared to the positive electrode active material in the positive electrode as a raw material. Within this range, the average particle diameter and particle distribution of the obtained positive electrode active material may be similar with those of the positive electrode active material of the raw material, thereby improving battery characteristics. The increase rate in average particle diameter may be calculated by Equation 1 below. Increase rate in average particle diameter (%) = [(b-a)/a] × 100

In Equation 1, a represents the average particle diameter of a positive electrode active material as a raw material, and b represents the average particle diameter of a recycled positive electrode active material measured after second milling.

### (e) Washing second milled positive electrode active material

The method of recycling a positive electrode active material of the present invention includes step (e) of washing the second milled positive electrode active material. In this case, since the lithium precursor is removed with a small amount of washing solution, performance degradation and gas generation of a battery due to the reaction between the residual lithium precursor and the electrolyte solution in the subsequent step may be prevented, and wastewater treatment may be omitted. In particular, lithium precursors, which are more likely to remain due to the high content of Ni in a high-nickel positive electrode active material, may be removed with a small amount of washing solution.

In the present disclosure, the high-nickel positive electrode active material refers to a positive electrode active material containing nickel in an amount of 60 mol% or more based on 100 mol% in total of other metals other than Li.

The washing may preferably include a step of mixing the positive electrode active material subjected to the second milling and the washing solution and then performing filtration and a step of drying a solid positive electrode active material obtained after filtration. In this case, excess lithium remaining in the positive electrode active material may be effectively removed.

For example, in the washing step, the weight ratio of the second milled positive electrode active material to the washing solution may be 1:0.5 to 1:10, preferably 1:0.5 to 1:7, more preferably 1:0.5 to 1:5, still more preferably 1:0.5 to 1:3, still more preferably 1:0.5 to 1:2, still more preferably 1:0.5 to 1.5. In this case, lithium precursors such as LiOH and Li₂CO₃, which are prone to remain, may be effectively removed. In particular, lithium precursors such as LiOH and Li₂CO₃, which are more likely to remain due to excess lithium added to suppress the cation mixing phenomenon that is likely to occur in a high-nickel positive electrode active material, may be effectively removed. The cation mixing phenomenon is a phenomenon that occurs because the particle sizes of nickel and lithium are similar.

In particular, when the annealed active material and the washing solution are mixed in a weight ratio of 1:0.5 to 1:2, preferably 1:0.5 to 1.5, the initial discharge capacity (DCH) and efficiency of a recycled positive electrode active material may be further improved.

The washing solution may be preferably water, more preferably distilled water or deionized water. In this case, lithium precursors such as LiOH and Li₂CO₃, which are more likely to remain due to excess lithium added to suppress the cation mixing phenomenon that is likely to occur in a high-nickel positive electrode active material, may be effectively removed.

For example, the washing may preferably include a step of mixing the positive electrode active material subjected to the second milling and the washing solution and then performing filtration and a step of drying a solid positive electrode active material obtained after filtration. In this case, excess lithium remaining in the positive electrode active material may be effectively removed.

The filtration may preferably be a pressure filtration using a filter.

The drying may be performed at preferably 100 to 500 °C, more preferably 120 to 400 °C, still more preferably 120 to 300 °C, still more preferably 120 to 200 °C.

The drying may preferably be vacuum drying.

Vacuum drying methods commonly used in the technical field to which the present invention pertains may be used in the present invention without particular limitation. For example, the vacuum drying may include drying under partial vacuum or low pressure.

### (f) Coating surface of washed positive electrode active material

The method of recycling a positive electrode active material according to the present invention include step (f) of coating the surface of the washed positive electrode active material. In this case, structural stability and electrochemical performance may be improved while maintaining the intrinsic properties of the positive electrode active material.

As another example, the method of recycling a positive electrode active material according to the present invention include step (f') of coating the surface of the second milled positive electrode active material. In this case, structural stability and electrochemical performance may be improved while maintaining the intrinsic properties of the positive electrode active material.

In the surface coating, preferably, the surface may be coated with a coating agent including one or more of a metal, an organic metal, and a carbon component in a solid or liquid manner, and then may be heat-treated at 100 to 1200 °C. In this case, structural stability and electrochemical performance may be improved while maintaining the intrinsic properties of the positive electrode active material.

The coating agent including a metal may be preferably a coating agent including one or more selected from the group consisting of B, W, Al, Ti, Mg, Ni, Co, Mn, Si, Zr, Ge, Sn, Cr, Fe, V, and Y, more preferably a coating agent including one or more selected from the group consisting of B, W, Al, Ti, and Mg, still more preferably a coating agent including boron (B), tungsten (W), or a mixture thereof, still more preferably a coating agent including tungsten (W) and boron (B), as a specific example, a coating agent including tungsten boride (WB). In this case, resistance characteristics and lifespan characteristics may be improved.

For example, the coating agent including a metal may be an oxide or an acid including the metal as an element in the molecule thereof.

As the coating agent including an organic metal, coating agents including an organic metal compound containing a metal commonly used in the art to which the present invention pertains may be used without particular limitation. As a specific example, metal alkoxides may be used.

As the coating agent including a carbon component, coating agents including a carbon component commonly used in the art to which the present invention pertains may be used without particular limitation. As a specific example, sugars such as sucrose may be used.

For example, based on components coated on the surface of the positive electrode active material excluding a solvent, based on 1 mol% of the metal in the positive electrode active material before coating, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the intrinsic properties of the positive electrode active material.

The heat treatment time may be preferably 1 to 16 hours, more preferably 3 to 7 hours. Within this range, structural stability and electrochemical performance may be improved while maintaining the intrinsic properties of the positive electrode active material.

Coating methods commonly used in the art to which the present invention pertains may be used as the coating method of the present invention without particular limitation. For example, a liquid method of mixing a positive electrode active material and a liquid coating agent, a mechanochemical method using the high mechanical energy of ball milling, a fluid bed coating method, a spray drying method, a precipitation method of precipitating a coating agent onto the surface of a positive electrode active material in an aqueous solution, a method using reaction between a vapor phase coating agent and a positive electrode active material, or sputtering may be used.

For example, the metal, organic metal, and carbon component may have a spherical shape, a plate shape, a square shape, or a needle shape. For example, such a shape may be controlled by changing process conditions in the preparation process. Each shape is not particularly limited as long as the shape follows a definition commonly accepted in the art to which the present invention pertains.

The coating agent may have preferably an average diameter of 1 to 1000 nm and a specific surface area of 10 to 100 m²/g, more preferably an average diameter of 10 to 100 nm and a specific surface area of 20 to 100 m²/g. Within this range, the coating agent may be uniformly adhered to the surface of the positive electrode active material, thereby improving the structural stability of the positive electrode active material. Thus, reduction of the lifespan of the positive electrode active material and degradation of the electrochemical performance thereof due to lattice deformation or collapse of a crystal structure may be prevented.

In the present disclosure, the average diameter may be measured by a measuring method commonly used in the art to which the present invention pertains. For example, the average diameter may be measured by a laser diffraction method. Specifically, positive electrode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter (D50) is calculated based on 50 % of the particle size distribution in the measuring device.

In the present disclosure, the specific surface area may be measured by a measuring method commonly used in the art to which the present invention pertains. For example, the specific surface area may be measured by Brunauer-Emmett-Teller (BET) method. Specifically, the specific surface area may be calculated based on the amount of nitrogen gas adsorbed under liquid nitrogen temperature (77 K) using BELSORP-mino II manufactured by BEL Japan Co.

### Recycled positive electrode active material

The recycled positive electrode active material of the present invention is prepared by the method of recycling a positive electrode active material. In this case, electrochemical performance, capacity characteristics, and resistance characteristics may be excellent.

In addition, the recycled positive electrode active material of the present invention may include one or more selected from the group consisting of lithium nickel oxide (LNO)-based positive electrode active materials, nickel·cobalt·manganese(NCM)-based positive electrode active materials, nickel·cobalt·aluminum (NCA)-based positive electrode active materials, and nickel·cobalt·manganese·aluminum (NCMA)-based positive electrode active materials, may include Ni in an amount of 60 mol% or more based on 100 mol% in total of other metals other than Li, and may have a standard deviation of average particle diameter of 3.0 or less. In this case, battery characteristics may be excellent.

The recycled positive electrode active material may have a standard deviation of average particle diameter of preferably 2.7 or less, more preferably 2.5 or less. Within this range, the diameter distribution of the recycled positive electrode active material may be similar with that of the positive electrode active material of the waste positive electrode, and battery characteristics may be improved.

The recycled positive electrode active material may have an increase rate in average particle diameter of 14 % or less, preferably 12 % or less, more preferably 10 % or less, still more preferably 8 % or less, still more preferably 0.1 to 8 % compared to the average particle diameter of the positive electrode active material of the waste positive electrode. Within this range, the diameter distribution of the recycled positive electrode active material may be similar with that of the positive electrode active material of the waste positive electrode, and battery characteristics may be improved.

The recycled positive electrode active material may include preferably one or more selected from the group consisting of a lithium cobalt oxide such as LiCoO₂ (hereinafter referred to as "LCO"); a lithium manganese oxide such as LiMnO₂ or LiMn₂O₄; a lithium iron phosphate compound such as LiFePO₄; a lithium nickel cobalt aluminum oxide (NCA); a lithium nickel oxide such as LiNiO₂; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. In this case, electrochemical performance, resistance characteristics, and capacity characteristics may be excellent.

As a specific example, the recycled positive electrode active material may be a compound represented by Chemical Formula 1 below.

[Chemical Formula 1] LiₐNiₓMn_{y}Co_{z}M_{w}O_{2+δ}

In Chemical Formula 1, M includes one or more selected from the group consisting of B, W, Al, Ti, and Mg, 1<a≤1.1, 0<x<0.95, 0<y<0.8, 0<z<1.0, 0≤w≤0.1, -0.02≤δ≤0.02, and x+y+z+w=1. In this case, electrochemical performance, resistance characteristics, and capacity characteristics may be excellent.

Based on 100 mol% in total of other metals other than Li, the recycled positive electrode active material may include Ni in an amount of preferably 80 mol% or more, more preferably 81 mol% or more. Within this range, initial discharge capacity, output performance, capacity characteristics, and resistance characteristics may be excellent.

For example, the surface of the recycled positive electrode active material may coated with metal or carbon, preferably metal. In this case, the structural stability of the positive electrode active material may be improved without chemical and physical changes thereof, thereby improving output performance, lifespan characteristics, and electrochemical properties such as capacity. In addition, substitution with heterogeneous elements occurs on the surface of the positive electrode active material, and as a result, the amount of residual lithium and pH may be reduced, thereby improving physicochemical properties.

The metal includes preferably one or more selected from the group consisting of B, W, Al, Ti, Mg, Ni, Co, Mn, Si, Zr, Ge, Sn, Cr, Fe, V, and Y, more preferably one or more selected from the group consisting of B, W, Al, Ti, and Mg, still more preferably boron (B), tungsten (W), or a mixture thereof, still more preferably tungsten (W) and boron (B), as a specific example, tungsten boride (WB). In this case, resistance characteristics and lifespan characteristics may be improved.

For example, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol% based on 100 mol% of metals in the positive electrode active material before coating. Within this range, structural stability and electrochemical performance may be improved while maintaining the intrinsic properties of the positive electrode active material.

The surface coating may preferably performed by coating the surface with a coating agent including one or more of a metal, an organic metal, and a carbon component in a solid or liquid manner and heat-treating the surface at 100 to 1200 °C, more preferably 200 to 1000 °C, still more preferably 250 to 800 °C. In this case, structural stability and electrochemical performance may be improved while maintaining the intrinsic properties of the positive electrode active material.

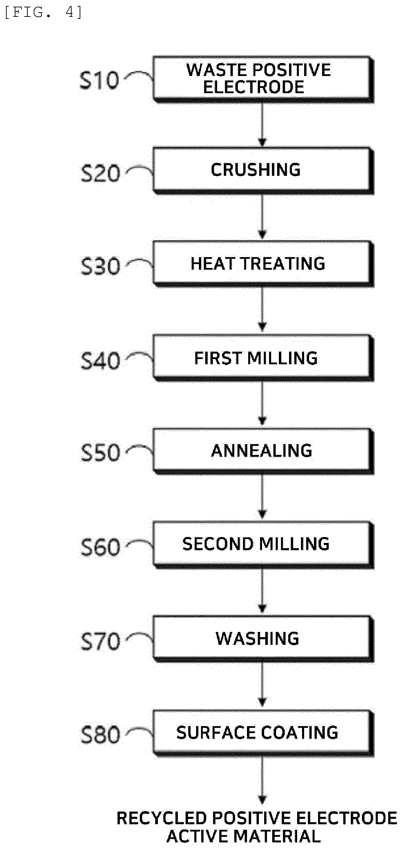

FIG. 4 below is a flowchart for explaining a process for recycling a positive electrode active material according to one embodiment of the present invention.

Referring to FIG. 4, first, positive electrode scraps as waste positive electrodes are prepared (step S10). For example, aluminum foil is coated with slurry prepared by adding N-methyl pyrrolidone (NMP) to an NCM-based lithium composite transition metal oxide, carbon black, and polyvinylidene fluoride and performing mixing, and then drying is performed in a vacuum oven set to about 120 °C to obtain a positive electrode sheet. Then, the positive electrode sheet is punched out to obtain a positive electrode plate of a certain size. In this process, positive electrode scraps are generated.

The positive electrode scrap includes a positive electrode active material layer formed on an aluminum foil. After volatilizing a solvent, the positive electrode active material layer has a structure in which a positive electrode active material and a conductive material are combined by a binder. Accordingly, when the binder is removed, the positive electrode active material is separated from the aluminum foil.

Next, the prepared positive electrode scraps are crushed into pieces of appropriate sizes (step S20). Here, the crushing includes cutting or shredding positive electrode scraps into easy-to-handle sizes. As a specific example, the crushed positive electrode scraps may have a size of 1 cm × 1 cm. For example, the crushing may be performed using a dry crushing device such as a hand-mill, a pin-mill, a disk-mill, a cutting-mill, and a hammer-mill. To increase productivity, a high-speed cutting machine may be used.

Preferably, whether to perform the crushing or the size of the pieces may be determined by considering the handling of positive electrode scraps and the characteristics of equipment used in the subsequent process. For example, when using equipment capable of continuous processing, positive electrode scraps must be crushed into smaller pieces because the pieces must have good fluidity.

Next, the crushed positive electrode scraps are heat-treated to recover a positive electrode active material (step S30). Here, heat treatment is performed to thermally decompose a binder and a conductive material.

For example, the heat treatment may be performed at 300 to 650 °C under an air atmosphere. At this time, the binder and the conductive material are thermally decomposed into CO₂ and H₂O and removed. Since the binder is removed, the positive electrode active material may be separated from the positive electrode active material layer.

It is important that the heat treatment is performed under an air atmosphere. When the heat treatment is performed in a reducing gas or inert gas atmosphere, the binder and the conductive material are carbonized rather than thermally decomposed. When the binder and the conductive material are carbonized, carbon components remain on the surface of the positive electrode active material, resulting in deterioration in the performance of a recycled positive electrode active material. In contrast, when the heat treatment is performed in the air, both the binder and the conductive material are removed because carbon components in the binder and conductive material reacts with oxygen, are converted into gases such as CO and CO₂, and disappears.

The heat treatment is performed at preferably 300 to 650 °C, as a specific example, 550 °C. When the heat treatment is performed at a temperature less than 300 °C, since the binder is not removed, separation of the current collector is difficult. When the heat treatment is performed at a temperature exceeding 650 °C, the current collector melts, making separation of the current collector impossible.

The heat treatment is performed at a temperature increase rate of preferably 1 to 20 °C/min, more preferably 3 to 10 °C/min, as a specific example, 5 °C/min. Within this range, heat treatment may be performed without causing strain to heat treatment equipment, and thermal shock to positive electrode scraps may be prevented.

The heat treatment may be performed until the binder is completely thermally decomposed. For example, the heat treatment may be performed for preferably 30 minutes or more, more preferably 30 minutes to 5 hours, as a specific example, 30 minutes. Within this range, the binder may be completely thermally decomposed, and thermal decomposition efficiency may be excellent.

For example, the heat treatment may be performed using various types of furnaces. For example, a box-type furnace may be used. Considering productivity, a rotary kiln capable of continuous processing may be used.

After the heat treatment, slow cooling or rapid cooling may be performed in the air.

Next, first milling is preformed on the recovered positive electrode active material (step S40).

In the first milling, it is important to mill the recovered positive electrode active material directly without a washing process. In this case, damage to the surface of the positive electrode active material may be prevented, the particles of the positive electrode active material may be uniform, and the process cost may be reduced by not performing a washing process.

For example, the first milling may be performed using a centrifugal mill or a jet mill, preferably a centrifugal mill. In this case, the particles of the recovered positive electrode active material may be homogenized, thereby improving battery characteristics.

For example, the first milling may be performed at 6000 to 20000 rpm, specifically 12000 rpm. Within this range, the crushing efficiency may be excellent, breakage of positive electrode active material particles may be prevented, and the productivity may be improved.

For example, the first milling may be performed for 5 seconds to 150 seconds, specifically 30 seconds. Within this range, the crushing efficiency may be excellent, the particles of a positive electrode active material may be prevented from being broken, and the productivity may be improved.

After the first milling, for example, the positive electrode active material may have an average particle diameter of 7.0 to 9.0 µm, preferably 7.5 to 8.5 µm, more preferably 8.0 to 8.5 µm. Within this range, battery characteristics may be improved.

Next, a lithium precursor is added to the first milled positive electrode active material and annealing is performed (step S50).

In addition, in the annealing step, loss of lithium in the positive electrode active material occurs during preceding step S30. In step S50, the loss amount of lithium is supplemented. In addition, during the preceding step, a deformed structure (e.g., Co₃0₄ in the case of an LCO active material) may be formed on the surface of the positive electrode active material. In step S45, the crystal structure of the positive electrode active material may be recovered through annealing, thereby improving the battery characteristics of a recycled positive electrode active material, or restoring the battery characteristics of the recycled positive electrode active material to the level of battery characteristics of a fresh positive electrode active material. Here, "fresh" is a concept opposite to "recycling", a fresh material means that the material was made for the first time, and the fresh material is the same word as "raw material" used in the examples.

As a specific example, LiOH is used as the lithium precursor.

Based on the molar ratio of lithium to other metals in a fresh positive electrode active material contained in the positive electrode active material layer, the lithium precursor is preferably added in a minimum amount corresponding to the lost lithium molar ratio. When an excess of lithium precursor is added relative to the amount of lithium lost, the unreacted lithium precursor may remain in a recycled positive electrode active material, which increases resistance. Accordingly, an appropriate amount of the lithium precursor needs to be added.

For example, when the molar ratio of lithium (Li) to other metals (M) in a fresh positive electrode active material is 1, the lithium precursor may be added in an amount such that the molar ratio of lithium is 0.001 to 0.4, preferably 0.01 to 0.4, more preferably 0.09 to 0.2. As a specific example, when the lithium precursor is added in an amount corresponding to a loss ratio relative to a lithium content in a fresh positive electrode active material, based on ICP analysis results, the capacity may be increased to a level equivalent to that of the fresh positive electrode active material. Here, the ICP analysis results have an error value of about ±0.02.

For example, based on 100 mol% in total of lithium included in the recovered positive electrode active material, the lithium precursor may be added in an amount capable of providing lithium corresponding to 1 to 40 mol%, preferably 1 to 15 mol%, more preferably 7 to 11 mol%. Within this range, battery characteristics may be improved because no residual precursor that may increase resistance remains in the recycled positive electrode active material.

For example, the annealing may be performed at 400 to 1000 °C, preferably 400 to 900 °C, more preferably 400 to 800 °C, still more preferably 450 to 710 °C under air or oxygen atmosphere. In this case, the temperature should be determined within a limited range according to the types of the lithium precursor.

The annealing temperature is preferably a temperature exceeding the melting point of the lithium precursor. However, since performance degradation occurs due to thermal decomposition of the positive electrode active material at a temperature exceeding 1000 °C, the annealing temperature should not exceed 1000 °C. When Li₂CO₃ is used as the lithium precursor, the annealing temperature is preferably 700 to 900 °C, more preferably 710 to 780 °C, still more preferably 750 to 780 °C. In addition, when LiOH is used as the lithium precursor, the annealing temperature is preferably 400 to 600 °C, more preferably 450 to 480 °C, still more preferably 470 to 480 °C.

For example, the annealing time is preferably 1 hour or more, more preferably 15 hours or less, still more preferably 4 to 6 hours. When the annealing time is long, a crystal structure may be sufficiently recovered, but even long-term annealing does not significantly affect performance. In this case, the same or similar equipment as in step S30 of performing heat treatment may be used as the annealing equipment.

Next, second milling is performed on the annealed positive electrode active material (step S60).

In the second milling (step S60), by reducing the particle size of the positive electrode active material that has increased through annealing step S50, the particle size of the positive electrode active material becomes similar to the particle size of the positive electrode active material in the waste positive electrode. Thus, battery characteristics may be improved.

For example, the second milling may be performed using a centrifugal mill or a jet mill, preferably a centrifugal mill. In this case, the particle size may be reduced without damaging the particles of the positive electrode active material.

For example, the second milling may be performed at 6000 to 20000 rpm, as a specific example, 18000 rpm. Within this range, milling efficiency may be excellent, and the particle size of the positive electrode active material may be reduced, thereby improving productivity.

For example, the second milling may be performed for 5 seconds to 150 seconds, specifically 30 seconds. Within this range, the crushing efficiency may be excellent, the particles of a positive electrode active material may be prevented from being broken, and the productivity may be improved.

After the second milling, the positive electrode active material may have an average particle diameter of 7.0 to 11.0 µm, preferably 7.5 to 10 µm, more preferably 7.5 to 9.0 µm, still more preferably 8.0 to 9.0 µm. Within this range, battery characteristics may be improved.

Next, as an optional step, the second milled positive electrode active material is washed (step S70).

Since the lithium precursor that failed to participate in the reaction in the annealing step S40 exists in the form of LiOH and Li₂CO₃ on the surface of the positive electrode active material, a residual lithium removal process is required to remove LiOH and Li₂CO₃. In particular, a high-nickel (Ni) positive electrode active material requires an excess of Li due to the cation mixing phenomenon, which promotes retention of lithium impurities such as lithium carbonate (Li₂CO₃) on the surface. In addition, these impurities may react with an electrolyte solution, deteriorating battery performance and generating gas, so these impurities must be thoroughly removed.

The washing may be performed preferably using distilled water. In this case, safety may be ensured, costs may be reduced, and transition metals contained in the positive electrode active material may be prevented from eluting.

In the washing, the annealed positive electrode active material and a washing solution are mixed in a weight ratio of 1:0.5 to 1:10, as a specific example, 1:1, filtration is performed, and the obtained solid positive electrode active material is dried.

Mixing of the annealed positive electrode active material and the washing solution may preferably be performed by agitation. The agitation is not particularly limited, but may be mechanical agitation, magnetic agitation, or ultrasonic agitation.

The mechanical agitation may include an impeller, and may preferably be performed at 250 to 350 RPM for 3 to 10 minutes.

The filtration is preferably vacuum filtration using a filter, and the drying is preferably vacuum drying at 120 to 140 °C.

Next, as an optional step, the surface of the washed positive electrode active material may be coated (step S80).

For example, in the surface coating, the surface is coated with a coating agent containing metals, organic metals, or carbon in a solid or liquid phase and heat-treated. When the heat treatment temperature is too low, formation of a desired surface protection layer by the dissimilar metals may not occur. When the heat treatment temperature is too high, due to thermal decomposition of the positive electrode active material, battery performance may deteriorate.

Specifically, when the washed positive electrode active material is coated with a metal oxide such as B, W, and B-W or an acid and heat-treated, a surface protection layer such as a lithium boron oxide layer is formed on the surface of the positive electrode active material.

The surface coating may be performed using a solid-phase or liquid-phase method, as a specific example, mixing, milling, spray drying, or grinding.

When the molar ratio of lithium to other metals in the positive electrode active material in the annealing step S50 is 1:1, lithium in the positive electrode active material reacts with the coating agent in surface coating step S60, and the molar ratio of lithium to other metal in the positive electrode active material is less than 1:1. In this case, the capacity of a battery containing the recycled positive electrode active material may not be fully (up to 100 %) expressed. However, in annealing step S50, when an excess of the lithium precursor is added so that lithium is contained in a greater molar ratio of 0.0001 to 0.1 compared to other metals in the positive electrode active material, a surface protection layer is formed in surface coating step S60, and the molar ratio of lithium to other metals in the positive electrode active material becomes 1:1, thereby preventing battery capacity degradation.

### Secondary battery

The secondary battery of the present invention includes the recycled positive electrode active material prepared using the method of recycling a positive electrode active material. In this case, since the particle distribution of the recycled positive electrode active material is similar with that of the positive electrode active material in the waste positive electrode, battery characteristics may be greatly improved. In addition, since acids and organic solvents are not used in the process of recovering and recycling a positive electrode active material, eco-friendliness may be secured. In particular, since an initial washing process is omitted, economics and productivity may be excellent.

In addition, the secondary battery of the present invention includes the positive electrode active material. In this case, since the average particle diameter of the recycled positive electrode active material and the standard deviation thereof are similar with those of the positive electrode active material in the waste positive electrode, battery characteristics may be greatly improved. In addition, since acids and organic solvents are not used in the process of recovering and recycling a positive electrode active material, eco-friendliness may be secured. In particular, since an initial washing process is omitted, economics and productivity may be excellent.

Description of the secondary battery of the present invention may include all of the description of the positive electrode active material and the method of recycling the positive electrode active material described above, and thus repeated description is omitted in this specification.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

### Example 1

After blanking a positive electrode plate, discarded positive electrode scraps (current collector: aluminum foil, positive electrode active material: NCM-based lithium composite transition metal oxide, containing 87 mol% nickel based on 100 mol% of the total metals excluding Li) were crushed, and the crushed scraps were heat-treated at 590 °C for 30 minutes in air to remove a binder and a conductive material and separate a current collector and a positive electrode active material. Through these processes, the positive electrode active material was recovered. At this time, temperature was increased to the heat treatment temperature at a temperature-increasing rate of 5 °C/min, and air was supplied at a rate of 10 L/min.

The first milling was performed on the recovered positive electrode active material using a centrifugal mill (ZM200, Retsch Co) at 12,000 rpm for 30 seconds. After the first milling, the average particle diameter (D50) of the positive electrode active material was 7.9 µm.

Based on 100 mol% in total of lithium in the positive electrode active material used as a raw material, LiOH as a lithium precursor was added to the first milled positive electrode active material in an amount that provided 15 mol% of lithium, and annealing was performed at a firing temperature of 750 °C for 5 hours in air. At this time, air was supplied at 3 L/min.

The second milling was performed on the annealed positive electrode active material at 18000 rpm for 30 seconds. After the second milling, the average particle diameter (D50) of the positive electrode active material was 8.99 µm.

### Example 2

The same procedure as in Example 1 was performed except that the first milling was performed at 12000 rpm for 30 seconds, and the second milling was performed at 12000 rpm for 30 seconds.

### Comparative Example 1

The same procedure as in Example 1 was performed except that the first and second milling was not performed.

### Comparative Example 2

The same procedure as in Example 1 was performed except that the second milling was not performed.

### Comparative Example 3

The same procedure as in Example 1 was performed except that the first milling was not performed.

### Comparative Example 4

After blanking a positive electrode plate, discarded positive electrode scraps (current collector: aluminum foil, positive electrode active material: NCM-based lithium composite transition metal oxide, containing 87 mol% nickel based on 100 mol% of the total metals excluding Li) were crushed, and the crushed scraps were heat-treated at 590 °C for 30 minutes in air to remove a binder and a conductive material and separate a current collector and a positive electrode active material. Through these processes, the positive electrode active material was recovered. At this time, temperature was increased to the heat treatment temperature at a temperature-increasing rate of 5 °C/min, and air was supplied at a rate of 10 L/min.

The recovered positive electrode active material was washed by immersing the material in distilled water and stirring the material simultaneously. At this time, the recovered positive electrode active material: distilled water was stirred at a weight ratio of 1:10 at 500 rpm for 10 minutes, and then only the active material was extracted by vacuum filtration using a filter.

After drying the washed positive electrode active material overnight at 100 °C, based on 100 mol% in total of lithium in the positive electrode active material as a raw material, LiOH as the lithium precursor was added in an amount capable of providing lithium corresponding to 15 mol%, and annealing was performed at a firing temperature of 750 °C for 5 hours in air. At this time, air was supplied at a rate of 3 L/min.

### Reference Example

Instead of a recycled positive electrode active material, a fresh NCM-based lithium complex transition metal oxide (containing 87 mol% of nickel based on 100 mol% in total of other metals other than Li) was used.

### [Test Example I: Particle distribution of recycled and fresh positive electrode active material]

The particle distribution of the recycled positive electrode active materials obtained in Examples 1 and 2, Comparative Examples 1 to 4, and Reference Example or a fresh positive electrode active material was measured using a laser diffraction method. Specifically, positive electrode active material particles were dispersed in a dispersion medium, the dispersed particles were placed in a commercially available laser diffraction particle size measuring device such as Microtrac MT 3000, and the particles were irradiated with an ultrasonic wave of about 28 kHz with an output of 60 W to measure particle distribution. Then, the average particle diameter, the standard deviation thereof, and the increase rate in particle diameter were calculated based on 50 % of the particle size distribution. The increase rate in particle diameter was calculated based on Reference Example.

The average particle diameters of the recycled positive electrode active materials obtained in Examples 1 and 2, Comparative Examples 1 to 4, and Reference Example or the fresh positive electrode active material, the standard deviation thereof, and the increase rate in particle diameter are shown in Table 1 below.

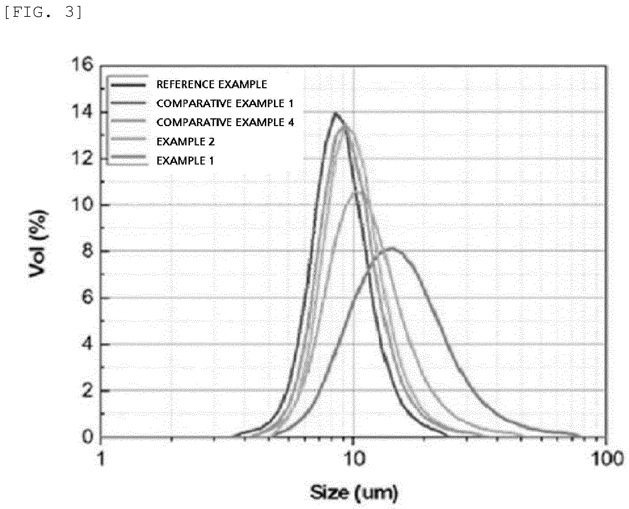

In addition, FIG. 2 below shows the particle distribution of the recycled positive electrode active materials obtained in Example 1, Reference Example, and Comparative Examples 1 to 3 or a fresh positive electrode active material, and FIG. 3 below shows the particle distribution of the recycled positive electrode active materials obtained in Examples 1 and 2, Reference Example, and Comparative Examples 1 and 4 or a fresh positive electrode active material.

**[Table 1]**

| Classification | Average particle diameter (µm) | Standard deviation of average particle diameter | Increase rate in particle diameter (%) |
|---|---|---|---|
| Example 1 | 8.99 | 2.47 | 7.41 |
| Example 2 | 9.44 | 2.57 | 12.78 |
| Comparative Example 1 | 14.02 | 6.29 | 67.50 |
| Comparative Example 2 | 11.88 | 4.60 | 41.94 |
| Comparative Example 3 | 9.70 | 3.57 | 15.89 |
| Comparative Example 4 | 10.41 | 3.69 | 24.37 |
| Reference Example | 8.37 | 2.16 | - |

As shown in Table 1, compared to Comparative Examples 1 to 4, in the case of Examples 1 and 2 according to the present invention, the average particle diameter and the standard deviation thereof and the increase rate in particle diameter are reduced, showing similar levels with Reference Example (fresh positive electrode active material). These results indicate that battery characteristics was further improved.

As shown in FIG. 2 below, Example 1 according to the present invention exhibits a particle distribution similar to that of Reference Example (fresh positive electrode active material), indicating further improvement in battery characteristics.

In addition, as shown in FIG. 3 below, Examples 1 and 2 according to the present invention show a particle distribution similar to that of Reference Example (fresh positive electrode active material), indicating improved battery characteristics.

### [Description of Symbols]

- 10 :: CURRENT COLLECTOR
- 20 :: ACTIVE MATERIAL LAYER
- 30 :: POSITIVE ELECTRODE SHEET
- 40 :: POSITIVE ELECTRODE PLATE
- 50 :: POSITIVE ELECTRODE SCRAPS

## Claims

1. A method of recycling a positive electrode active material, comprising:
recovering a positive electrode active material in a positive electrode active material layer by thermally decomposing a binder and conductive material in the positive electrode active material layer by heat-treating a waste positive electrode having the positive electrode active material layer formed on a current collector;
performing first milling on the recovered positive electrode active material;
adding a lithium precursor to the first milled positive electrode active material and performing annealing at 400 to 1000 °C; and
performing second milling on the annealed positive electrode active material.

2. The method according to claim 1, wherein the positive electrode active material layer comprises one or more selected from the group consisting of lithium nickel oxide (LNO)-based positive electrode active materials, nickel·cobalt·manganese (NCM)-based positive electrode active materials, nickel·cobalt·aluminum (NCA)-based positive electrode active materials, and nickel·cobalt·manganese·aluminum (NCMA)-based positive electrode active materials, and comprises Ni in an amount of 60 mol% or more based on 100 mol% in total of other metals other than Li.

3. The method according to claim 1, wherein the heat treatment is performed at 300 to 650 °C in air or oxygen atmosphere.

4. The method according to claim 1, wherein the first and second milling is performed using a centrifugal mill or a jet mill.

5. The method according to claim 1, wherein the first and second milling is performed at 6000 to 20000 rpm.

6. The method according to claim 1, wherein the positive electrode active material obtained after the second milling has an increase rate in average particle diameter of 14 % or less and a standard deviation of average particle diameter of 3.0 or less compared to a positive electrode active material in a raw material.

7. The method according to claim 1, wherein the lithium precursor comprises one or more selected from LiOH, Li₂CO₃, LiNO₃, and Li₂O.

8. The method according to claim 1, wherein, based on 100 mol% in total of lithium in the positive electrode active material used as a raw material, the lithium precursor is added in an amount capable of providing lithium in an amount corresponding to 1 mol% to 40 mol%.

9. The method according to claim 1, wherein the annealing is performed at 400 to 1000 °C in air.

10. The method according to claim 1, comprising washing the second milled positive electrode active material; coating a surface of the second milled positive electrode active material; or washing the second milled positive electrode active material and then coating a surface thereof.

11. The method according to claim 10, wherein, in the washing step, a weight ratio of an annealed positive electrode active material to a washing solution is 1:0.5 to 1:10.

12. The method according to claim 10, wherein the surface coating is performed by coating the surface with one or more of metals, organic metals, and carbon components in a solid or liquid form and heating the surface at 100 to 1200 °C.

13. A recycled positive electrode active material, comprising one or more selected from the group consisting of lithium nickel oxide (LNO)-based positive electrode active materials, nickel·cobalt·manganese (NCM)-based positive electrode active materials, nickel·cobalt·aluminum (NCA)-based positive electrode active materials, and nickel·cobalt·manganese·aluminum (NCMA)-based positive electrode active materials; comprising Ni in an amount of 60 mol% or more based on 100 mol% in total of other metals other than Li; and having a standard deviation of average particle diameter of 3.0 or less.

14. The recycled positive electrode active material according to claim 1, wherein a surface of the positive electrode active material is coated with a coating agent containing metal or carbon.

15. The recycled positive electrode active material according to claim 14, wherein the metal is boron (B), tungsten (W), or a mixture thereof.

16. A secondary battery, comprising the recycled positive electrode active material according to any one of claims 13 to 15.
